# EUROPEAN PATENT SPECIFICATION

(11) **EP 4 030 071 B1**
(45) Date of publication and mention of the grant of the patent: **02.12.2026**
(21) Application number: 20877097.4
(22) Date of filing: 26.08.2020
(51) Int. Cl.: F16C 11/06, F16C 11/10, B60K 20/02, F16C 11/08

(54) **BEARING FOR SHIFT LEVER**
LAGER FÜR EINEN SCHALTHEBEL
PALIER POUR UN LEVIER DE CHANGEMENT DE VITESSE

(30) Priority: 18.10.2019 JP 2019191085
(43) Date of publication of application: 20.07.2022
(73) Proprietor: Oiles Corporation, Tokyo 108-0075 (JP)
(72) Inventor: KOYANAGI, Kohei, Fujisawa-shi, Kanagawa 252-0811 (JP); KANEKO, Ryohei, Fujisawa-shi, Kanagawa 252-0811 (JP); ASANO, Yoshifumi, Fujisawa-shi, Kanagawa 252-0811 (JP)
(74) Representative: Canzler & Bergmeier Patentanwälte Partnerschaft mbB
(86) International application number: PCT/JP2020/032233
(87) International publication number: WO 2021/075158

(56) References cited:
- WO-A1-2015/098542
- DE-A1- 3 742 084
- DE-U1- 29 614 638
- DE-U1- 9 308 035
- GB-A- 2 316 443
- JP-A- S 523 970
- JP-U- S59 171 217
- JP-U- S6 228 223
- US-A- 3 856 423

## Description

### [Technical Field]

The present invention relates to a bearing for a shift lever that swingably supports an automobile shift lever, and more particularly relates to a bearing for a shift lever arranged between the automobile shift lever and a housing on the vehicle side.

### [Background Art]

Conventionally, as a bearing member for supporting a shift lever, a bearing member is known which is provided inside with an inner spherical sheet for receiving an outer spherical surface of a spherical portion provided at a base end portion of the shift lever (for example, see JP 2014-151708 A).

DE 296 146 38 U1 discloses a shift lever bearing for transmissions of motor vehicles according to the preamble of claim 1. The shift lever bearer consists of an inner joint part with a spherical circumferential surface and an outer joint part with a spherical bore, which is provided with a plurality of axially projecting, hook-shaped projections distributed around the circumference, which engage with radial surfaces behind corresponding surfaces of a housing or the like.

WO 2015/098542 A1 discloses a shift lever device with a lever shaft that has an integrally disposed shaft support part made from resin at a lower part of the lever shaft as well as a housing in which the lever shaft with its shaft support part can oscillate in a shifting direction and in a selecting direction that is orthogonal to the shifting direction. A base part integrally formed with said shaft support part is fixed around one end of a metal rod of the lever shaft. Two coupling spherical parts are located on opposing sides of the base part and both these coupling spherical parts are mounted in bearing parts, of which one is moved in an upward direction upon shifting the lever shaft.[Summary of Invention]

### [Technical Problem]

In general, a bearing member for supporting a shift lever is required to prevent the axial movement of the shift lever and to support the shift lever smoothly and tiltably.

However, in the above-described bearing member, in order to suitably ensure the strength to prevent the shift lever from being pulled out from the bearing member, the bearing member is divided into a plurality of pieces, and the plurality of pieces are integrally formed together with a connecting member for connecting the pieces, and the connecting member is in contact with the shift lever over the entire circumference.

As a result, the bearing member is in a state of holding the spherical portion of the shift lever therein, and the frictional resistance with respect to the shift lever is increased.

The present invention solves the problem of the prior art as described above, that is, the object of the present invention is to provide a bearing for a shift lever that can achieve with a single member the function of restricting the movement of the automobile shift lever in the lever axial direction and the function of smoothly operating a shift change when performing a shift change.

### [Solution to Problem]

In the invention according to claim 1, a bearing is for a shift lever and made of synthetic resin, the bearing being arranged between an automobile shift lever, which has a spherical portion serving as a center of swing in the shift lever body, and a housing on the vehicle side so that the bearing swingably supports the automobile shift lever, wherein the bearing is composed of: an annular inner peripheral side wall portion in contact with the automobile shift lever; an annular outer peripheral side wall portion in contact with the housing; and an annular rib portion, with which the inner peripheral side wall portion and the outer peripheral side wall portion are concentrically spaced apart from each other and which integrally connects the inner peripheral side wall portion and the outer peripheral side wall portion, and wherein the inner peripheral side wall portion has an upper contact area and a lower contact area, which come into contact with and interfere with the spherical portion of the automobile shift lever, and a shift lever separation area between the upper contact area and the lower contact area that is separated from the spherical portion of the automobile shift lever. The inner peripheral side wall portion is formed to be elastically deformable so as to come into contact with the outer peripheral side wall portion. The rib portion connects the lower side of the inner peripheral side wall portion and the lower side of the outer peripheral side wall portion. Thereby, the above-described problem can be solved.

In the invention according to claim 2, in addition to the configuration of the bearing for a shift lever according to claim 1, the outer peripheral side wall portion has a housing contact area, which is elastically deformable and comes into contact with the housing, and a housing separation area separated from the housing. Thereby, the above-described problem can be further solved.

In the invention according to claim 3, in addition to the configuration of the bearing for a shift lever according to claim 1 or 2, the upper contact area of the inner peripheral side wall portion has an upper curved surface for coming into contact with the spherical portion of the automobile shift lever, and the lower contact area of the inner peripheral side wall portion has a lower curved surface for coming into contact with the spherical portion of the automobile shift lever, and the curvature center of the upper curved surface and the curvature center of the lower curved surface are separated in the vertical direction. Thereby, the above-described problem can be further solved.

In the invention according to claim 4, in addition to the configuration of the bearing for a shift lever according to any one of claims 1 to 3, the inner peripheral side wall portion is divided at predetermined intervals along the circumferential direction, and the rib portion integrally connects the adjacent inner peripheral side wall portions. Thereby, the above-described problem can be further solved.

In the invention according to claim 5, in addition to the configuration of the bearing for a shift lever according to any one of claims 1 to 4, a protrusion protruding in the vertical direction is formed on at least one of a top surface and a bottom surface of the outer peripheral side wall portion. Thereby, the above-described problem can be further solved.

### [Advantageous Effect of Invention]

The bearing for a shift lever of the present invention is arranged between an automobile shift lever, which has a spherical portion serving as a center of swing in the shift lever body, and a housing on the vehicle side. Thus, the bearing can swingably support the automobile shift lever, and the following effects peculiar to the present invention can be obtained.

According to the bearing for a shift lever of the invention according to claim 1, the bearing is composed of: an annular inner peripheral side wall portion in contact with the automobile shift lever; an annular outer peripheral side wall portion in contact with the housing; and an annular rib portion, with which the inner peripheral side wall portion and the outer peripheral side wall portion are concentrically spaced apart from each other and which integrally connects the inner peripheral side wall portion and the outer peripheral side wall portion. Thus, since the bearing for a shift lever is treated as a single member, the assembling operation of the housing on the vehicle side and the automobile shift lever can be easily carried out, and the burden of parts management can be reduced because the number of parts is minimized.

Further, the inner peripheral side wall portion has an upper contact area and a lower contact area, which come into contact with and interfere with the spherical portion of the automobile shift lever. Thus, since the inner peripheral side wall portion interferes with the spherical portion of the automobile shift lever, it is possible to suppress rattling between the automobile shift lever and the bearing for a shift lever when performing a shift change.

Further, the inner peripheral side wall portion has a shift lever separation area separated from the spherical portion of the automobile shift lever. Thus, since the contact resistance of the spherical portion of the automobile shift lever with respect to the inner peripheral side wall portion is reduced because the spherical portion separates from the shift lever separation area, the smooth shift change operation of the automobile shift lever when performing a shift change can be achieved.

Further, the inner peripheral side wall portion is formed to be elastically deformable so as to come into contact with the outer peripheral side wall portion. Thus, in a case where an excessive load is applied to the upper contact area or the lower contact area of the inner peripheral side wall portion as a result of inadvertently applying large power to the automobile shift lever in the lever axis direction, this excessive load makes the upper contact area or the lower contact area of the inner peripheral side wall portion elastically deformed toward the outer peripheral side wall portion and brought into contact with the outer peripheral side wall portion. As a result, the excessive load applied from the automobile shift lever can be received by both the inner peripheral side wall portion and the outer peripheral side wall portion. Therefore, the movement of the automobile shift lever in the lever axis direction can be suppressed so that it is possible to elastically hold the automobile shift lever and to prevent the automobile shift lever from being taken out from the bearing for a shift lever. In addition, in a case where the automobile shift lever is tilted in a predetermined direction for a shift change or the like, compared to the case where the automobile shift lever is moved in the lever axis direction, lower load is applied to the inner peripheral side wall portion and the inner peripheral side wall portion does not come into contact with the outer peripheral side wall portion in the elastic deformation. Thus, the frictional resistance between the automobile shift lever and the bearing for a shift lever does not increase, and the automobile shift lever can be supported in a low friction state.

The rib portion connects the lower side of the inner peripheral side wall portion and the lower side of the outer peripheral side wall portion. Thus, since the rigidity of the lower side of the inner peripheral side wall portion is increased, the predetermined swing position of the automobile shift lever can be maintained without the automobile shift lever being taken out from the bearing vertically downward.

Therefore, it is possible to achieve with a single member the function of restricting the movement of the automobile shift lever in the lever axial direction and the function of smoothly operating a shift change when performing a shift change.

According to the bearing for a shift lever of the invention according to claim 2, the outer peripheral side wall portion has a housing contact area, which is elastically deformable and comes into contact with the housing. Thus, in addition to the effect of the bearing for a shift lever of the invention according to claim 1, since the bearing for a shift lever is firmly held in close contact with the housing, it is possible to suppress rattling between the housing and the bearing for a shift lever.

Further, the outer peripheral side wall portion has a housing separation area separated from the housing. Thus, since the outer peripheral side wall portion can be elastically deformed toward the housing side from the state of being held by the housing, the bearing for a shift lever can elastically support a larger load.

According to the bearing for a shift lever of the invention according to claim 3, the curvature center of the upper curved surface and the curvature center of the lower curved surface are separated in the vertical direction. Thus, in addition to the effect of the bearing for a shift lever of the invention according to claim 1 or 2, since the contact resistance of the spherical portion of the automobile shift lever with respect to the inner peripheral side wall portion is reduced because the upper curved surface and the lower curved surface of the inner peripheral side wall portion are in line contact (not in surface contact) with the spherical portion of the automobile shift lever, further smooth shift change operation with the automobile shift lever can be achieved when performing a shift change.

According to the bearing for a shift lever of the invention according to claim 4, the inner peripheral side wall portion is divided at predetermined intervals along the circumferential direction, and the rib portion integrally connects the adjacent inner peripheral side wall portions. Thus, in addition to the effect of the bearing for a shift lever of the invention according to any one of claims 1 to 3, compared to the case where the entire circumference of the spherical portion of the automobile shift lever is held by the inner peripheral side wall portion, the contact resistance of the spherical portion of the automobile shift lever with respect to the inner peripheral side wall portion is reduced because of arranging the upper contact area and the lower contact area of the inner peripheral side wall portion at predetermined intervals along the circumferential direction. Therefore, further smooth shift change operation with the automobile shift lever can be achieved when performing a shift change.

According to the bearing for a shift lever of the invention according to claim 5, a protrusion protruding in the vertical direction is formed on at least one of a top surface and a bottom surface of the outer peripheral side wall portion. Thus, in addition to the effect of the bearing for a shift lever of the invention according to any one of claims 1 to 4, when the bearing for a shift lever is held from the vertical direction, since the protrusion is elastically deformed and the bearing for a shift lever is positioned with respect to the housing, the bearing for a shift lever can be stably mounted on the housing in a state where the vertical rattling between the housing and the bearing of a shift lever is absorbed.

### [Brief Description of Drawings]

Figure 1 is an exploded perspective view illustrating assembly of a bearing according to the first example of the present invention.
Figure 2 is a cross-sectional view taken along the line II-II of Figure 1.
Figure 3 is a perspective view of the bearing according to the first example of the present invention.
Figure 4 is a partially enlarged view of Figure 2.
Figure 5 is a cross-sectional view of a main part while the shift lever is being pulled out from the bearing.
Figure 6 is a cross-sectional view of a main part while the shift lever is being pushed toward the bearing.

### [Description of Embodiments]

The present invention may have any specific embodiment as long as a bearing for a shift lever and made of synthetic resin is arranged between an automobile shift lever, which has a spherical portion serving as a center of swing in the shift lever body, and a housing on the vehicle side so that the bearing swingably supports the automobile shift lever, wherein the bearing is composed of: an annular inner peripheral side wall portion in contact with the automobile shift lever; an annular outer peripheral side wall portion in contact with the housing; and an annular rib portion, with which the inner peripheral side wall portion and the outer peripheral side wall portion are concentrically spaced apart from each other and which integrally connects the inner peripheral side wall portion and the outer peripheral side wall portion, and wherein the inner peripheral side wall portion has an upper contact area and a lower contact area, which come into contact with and interfere with the spherical portion of the automobile shift lever, and a shift lever separation area separated from the spherical portion of the automobile shift lever, and is formed to be elastically deformable so as to come into contact with the outer peripheral side wall portion, so that the function of restricting the movement of the automobile shift lever in the lever axial direction and the function of smoothly operating a shift change when performing a shift change are achieved with a single member.

For example, the bearing for a shift lever of the present invention may be made of any material as long as the material is a synthetic resin having low sliding resistance. However, the material is preferably a polyolefin resin, a polyacetal resin, a polyester resin, a polyamide resin, a urethane resin or the like.

### [Example 1]

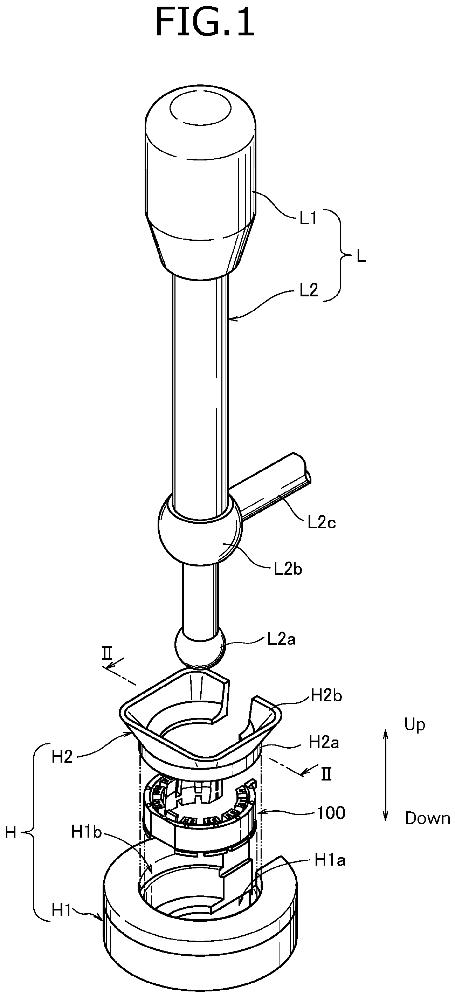

Hereinafter, a bearing 100 for a shift lever (hereinafter referred to as "bearing") according to the first example of the present invention will be described with reference to Figs. 1 to 6.

### <1. The peripheral structure of the bearing 100 according to the first example of the present invention>

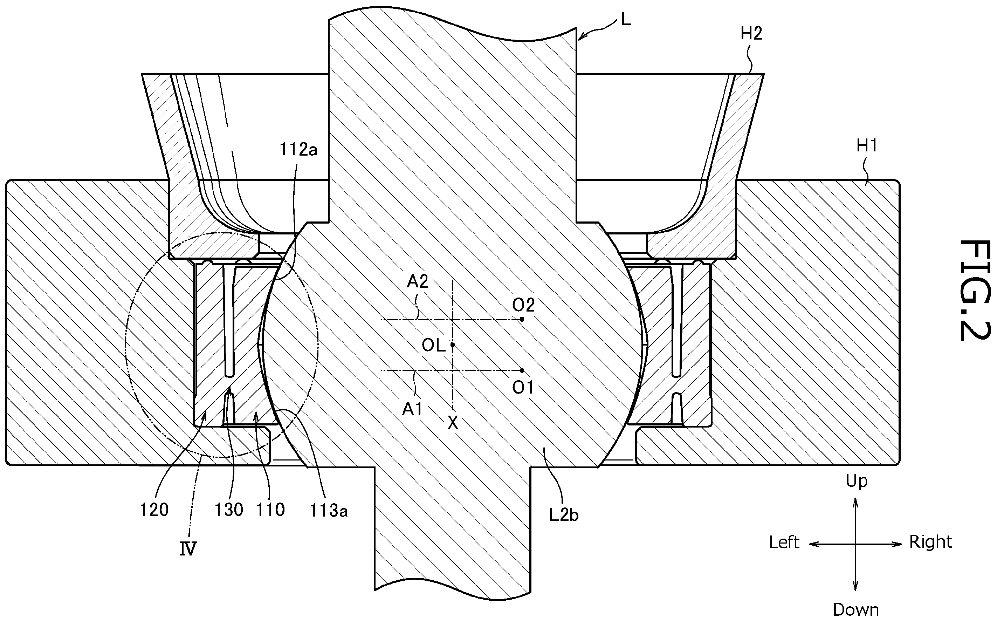

First, the peripheral structure of the bearing 100 according to the first example of the present invention will be described with reference to Figs. 1 and 2.

Fig. 1 is an exploded perspective view illustrating assembly of the bearing according to the first example of the present invention, and Fig. 2 is a sectional view taken along the line II-II of Fig. 1.

As shown in Fig. 1 and the like, the bearing 100 according to the first example of the present invention is an annular member, and is clamped in the vertical direction by a housing H attached to a vehicle body.

The vertical direction in the present example is the central axis direction of the bearing 100.

The direction in which a protrusion 123 described later is provided is referred to as "upper direction", and the direction in which the protrusion 123 is not provided is referred to as "lower direction".

The housing H is composed of a lower housing H1, into which the bearing 100 is inserted from above, and an upper housing H2 for holding the bearing 100 from above.

The lower housing H1 is a C-shaped member in a plan view and is formed of a bearing accommodating portion H1a, which is columnar-shaped and into which the bearing 100 is inserted, and an upper housing accommodating portion H1b, which is columnar-shaped in a plan view and into which the upper housing H2 is partially inserted.

The bearing accommodating portion H1a is located below the upper housing accommodating portion H1b, has the same central axis as the upper housing accommodating portion H1b and has a smaller diameter than the upper housing accommodating portion H1b.

The upper housing H2 is a C-shaped member in a plan view and is formed of a cylindrical insertion portion H2a, which is inserted into the lower housing H1, and a flange portion H2b, which is rectangular-shaped in a plan view and has a mouth whose opening area increases toward the upper direction from the insertion portion H2a.

Further, the bearing 100 swingably supports a shift lever L for manual vehicles (automobile shift lever).

Therefore, the bearing 100 is arranged between the shift lever L and the housing H.

The shift lever L is composed of a shift knob L1, which is gripped by a driver when he performs a shift change, and a shift lever body L2, which extends downward from the shift knob L1.

The shift lever body L2 is composed of a small spherical portion L2a formed at the lower end, a large spherical portion (spherical portion) L2b formed above the small spherical portion L2a, and a connecting shaft L2c extending horizontally from the large spherical portion L2b.

The small spherical portion L2a is connected to a not-shown shift cable.

The large spherical portion L2b has a larger diameter than the small spherical portion L2a, and is supported by the bearing 100 as shown in Fig. 2.

Therefore, while the shift lever L is supported by the bearing 100, the large spherical portion L2b serves as a center of swing for the shift lever L.

Further, the connecting shaft L2c is connected to a not-shown select lever.

### <2. The structure of the bearing 100 according to the first example of the present invention>

Next, the structure of the bearing 100 will be described with reference to Figs. 2 to 4.

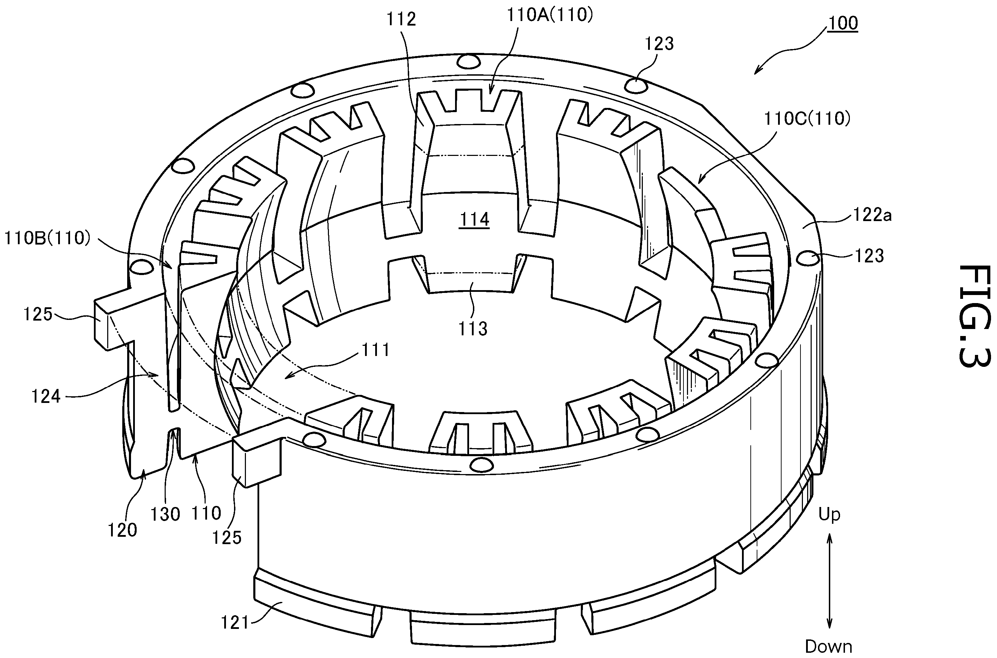

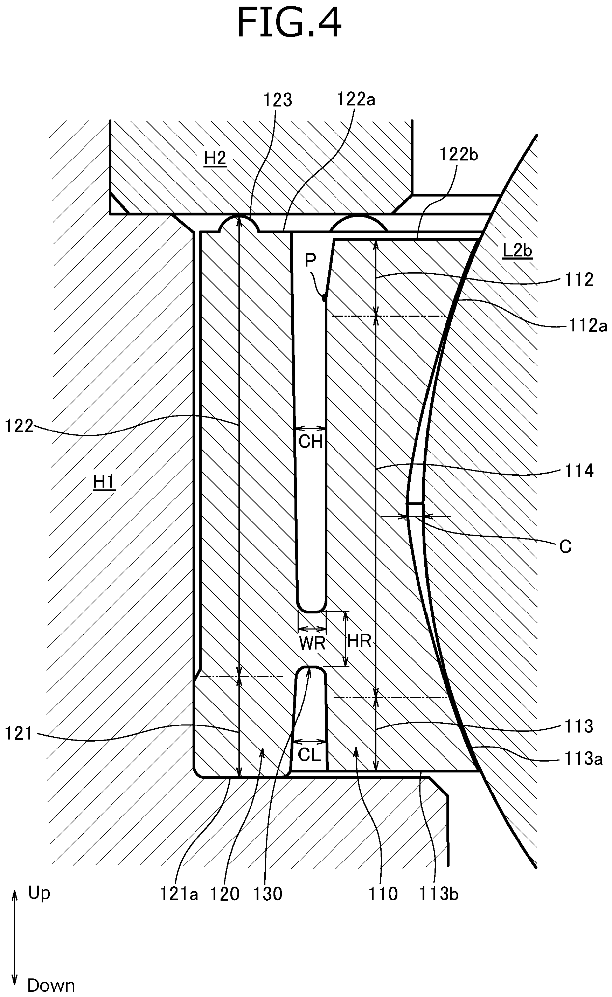

Fig. 3 is a perspective view of the bearing according to the first example of the present invention, and Fig. 4 is a partially enlarged view of Fig. 2.

In Figs. 2 and 4, a state is illustrated in which no load is applied to the bearing 100 from the shift lever L.

The bearing 100 is made of synthetic resin, and as shown in Fig. 3 and the like, the bearing 100 is single member composed of a C-shaped inner peripheral side wall portion 110 in contact with the shift lever L, a C-shaped outer peripheral side wall portion 120 in contact with the lower housing H1, and an annular rib portion 130, with which the inner peripheral side wall portion 110 and the outer peripheral side wall portion 120 are concentrically spaced apart from each other and which integrally connects the inner peripheral side wall portion 110 and the outer peripheral side wall portion 120.

### <2.1. The inner peripheral side wall portion>

As shown in Fig. 3, the inner peripheral side wall portion 110 is divided at predetermined intervals along the circumferential direction.

As shown in Fig. 3, each inner peripheral side wall portion is E-shaped (110A), U-shaped (110B), or simply thin-walled (110C) depending on the location.

Among these, the U-shaped inner peripheral side wall portions 110B are provided on both sides of an opening 111 of the inner peripheral side wall portion 110, and the thin-walled inner peripheral side wall portion 110C is provided at a position facing the opening 111 of the inner peripheral side wall portion 110.

Hereinafter, with reference to the E-shaped inner peripheral side wall portion 110A, the detailed structure of the inner peripheral side wall portion 110 will be described.

As shown in Figs. 3 and 4, the inner peripheral side wall portion 110 has an upper contact area 112, which is I-shaped in a cross-sectional view and is in contact with the large spherical portion L2b of the shift lever L on the vertically upper side, an lower contact area 113, which is in contact with the large spherical portion L2b of the shift lever L on the vertically lower side, and a shift lever separation area 114 which is separated from the large spherical portion L2b of the shift lever L.

The upper contact area 112 is elastically deformable and is in contact with and interferes with the large spherical portion L2b of the shift lever L in a state of being elastically deformed toward the outer peripheral side wall portion 120.

As shown in Fig. 2, the curvature center O1 of an upper curved surface 112a of the upper contact area 112 for coming into contact with the shift lever L is located below the curvature center OL of the large spherical portion L2b of the shift lever L.

Further, the curvature center O1 of the upper curved surface 112a is also separated from the curvature center OL of the large spherical portion L2b of the shift lever L in the horizontal direction.

Therefore, the curvature center O1 of the upper curved surface 112a is arranged on a single virtual circle A1 (see Fig. 2) in the plan view of the bearing 100.

Further, in the present example, the curvature radius of the upper curved surface 112a is larger than the curvature radius of the large spherical portion L2b of the shift lever L.

That is, the curvature center O1 of the upper curved surface 112a and the upper curved surface 112a are always located at positions with the central axis X of the virtual circle A1 being therebetween.

Like the upper contact area 112, the lower contact area 113 is also elastically deformable and is in contact with and interferes with the large spherical portion L2b of the shift lever L in a state of being elastically deformed toward the outer peripheral side wall portion 120.

As shown in Fig. 2, the curvature center O2 of a lower curved surface 113a of the lower contact area 113 for coming into contact with the shift lever L is located above the curvature center OL of the large spherical portion L2b of the shift lever L.

Further, the curvature center O2 of the lower curved surface 113a is also separated from the curvature center OL of the large spherical portion L2b of the shift lever L in the horizontal direction, similarly to the curvature center O1 of the upper curved surface 112a.

Therefore, the curvature center O2 of the lower curved surface 113a is also arranged on a single virtual circle A2 (see Fig. 2) having the same central axis and the same diameter as the virtual circle A1, on which the curvature center O1 of the upper curved surface 112a is arranged, in the plan view of the bearing 100.

Further, in the present example, the curvature radius of the lower curved surface 113a is equal to the curvature radius of the upper curved surface 112a, and is larger than the curvature radius of the large spherical portion L2b of the shift lever L.

Therefore, the curvature center O2 of the lower curved surface 113a and the lower curved surface 113a are always located at positions with the central axis X of the virtual circle A2 being therebetween.

Further, the central axis X of the virtual circle A1 and the virtual circle A2 substantially coincides with the central axis of the bearing 100 in the plan view.

In a state where the shift lever L is assembled to the bearing 100, the curvature center OL of the large spherical portion L2b of the shift lever L is also located on the central axis X of the virtual circle A1 and the virtual circle A2.

Therefore, as shown in Fig. 2, the curvature center O1 of the upper curved surface 112a and the curvature center O2 of the lower curved surface 113a are separated not only in the vertical direction but also in the horizontal direction from the curvature center OL of the large spherical portion L2b of the shift lever L.

As shown in Fig. 4, the shift lever separation area 114 is provided substantially in the center of the vertical direction in the inner peripheral side wall portion 110, and a gap C is formed between the shift lever separation area 114 and the large spherical portion L2b of the shift lever L.

This gap C becomes largest near the center of the vertical direction in the inner peripheral side wall portion 110, and becomes smaller as the distance in the vertical direction from the vicinity of the center increases.

As described above, since the inner peripheral side wall portion 110 has the upper contact area 112 and the lower contact area 113 that come into contact with and interfere with the large spherical portion L2b of the shift lever L, the inner peripheral side wall portion 110 interferes with the large spherical portion L2b of the shift lever L.

### <2.2. The outer peripheral side wall portion>

As shown in Fig. 4, the outer peripheral side wall portion 120 is I-shaped in a cross-sectional view and has a housing contact area 121, which is horizontally in contact with the lower housing H1, and a housing separation area 122, which is horizontally separated from the lower housing H1.

The housing contact area 121 is an area below a rib portion 130 as shown in Figs. 3 and 4, and is intermittently divided along the circumferential direction as shown in Fig. 3.

The housing contact area 121 is elastically deformable with respect to the rib portion 130, and is in contact with the lower housing H1 in a state where the housing contact area 121 interferes with the lower housing H1 (that is, in a state of being elastically deformed).

As a result, the housing contact area 121 is pressed against the lower housing H1 by an elastic force, and the bearing 100 is securely held in close contact with the housing H.

Further, a bottom surface 121a of the housing contact area 121 is located below a bottom surface 113b of the lower contact area 113 of the inner peripheral side wall portion 110.

As a result, the inner peripheral side wall portion 110 of the bearing 100 is separated from the lower housing H1.

Since the housing separation area 122 is horizontally separated from the lower housing H1, from the state where the outer peripheral side wall portion 120 is held by the lower housing H1, the outer peripheral side wall portion 120 can be further elastically deformed toward the lower housing H1 side.

Further, a top surface 122a of the housing separation area 122 is located above a top surface 112b of the upper contact area 112 of the inner peripheral side wall portion 110.

As a result, the inner peripheral side wall portion 110 of the bearing 100 is separated from the upper housing H2.

Further, as shown in Fig. 3, a plurality of the spherical protrusions 123 protruding vertically upward are formed on the top surface 122a of the housing separation area 122.

When the bearing 100 is clamped between the lower housing H1 and the upper housing H2, since the outer peripheral side wall portion 120 is made of synthetic resin, the protrusion 123 is in contact with the upper housing H2 in a state where the protrusion 123 is crushed to some extent.

That is, when the bearing 100 is held by the housing H in the vertical direction, the elastic deformation of the protrusion 123 makes it easy to position the bearing 100 with respect to the housing H.

Further, as shown in Fig. 3, on both sides of an opening 124 of the outer peripheral side wall portion 120, prismatic positioning protrusions 125, which position the bearing 100 when the bearing 100 is inserted into the lower housing H1, project in the horizontal direction.

### <2.3. Gaps between rib portion and inner and outer peripheral side wall portions>

The rib portion 130 connects the lower side of the inner peripheral side wall portion 110 and the lower side of the outer peripheral side wall portion 120.

Further, as shown in Fig. 3, the rib portion 130 integrally connects the adjacent inner peripheral side wall portions 110.

Further, the height HR of the rib portion 130 is larger than the width WR of the rib portion 130.

The rib portion 130 separates the inner peripheral side wall portion 110 and the outer peripheral side wall portion 120.

Above the rib portion 130, the outer peripheral side of the inner peripheral side wall portion 110 extends substantially vertically upward in the shift lever separation area 114, and is inclined toward the inner peripheral side from a bending point P in the upper contact area 112. On the other hand, the inner peripheral side of the outer peripheral side wall portion 120 extends substantially vertically upward.

Therefore, above the rib portion 130, a horizontal distance CH between the inner peripheral side wall portion 110 and the outer peripheral side wall portion 120 is substantially same up to the bending point P, and above the bending point P, the horizontal distance CH increases upward.

Further, below the rib portion 130, the outer peripheral side of the inner peripheral side wall portion 110 extends substantially vertically downward. On the other hand, the inner peripheral side of the outer peripheral side wall portion 120 is inclined toward the outer peripheral side.

Therefore, below the rib portion 130, a horizontal distance CL between the inner peripheral side wall portion 110 and the outer peripheral side wall portion 120 increases downward.

Below the bending point P and above the rib portion 130, the horizontal distance CH between the inner peripheral side wall portion 110 and the outer peripheral side wall portion 120 is a distance such that, when the upper contact area 112 of the inner peripheral side wall portion 110 is deformed toward the outer peripheral side wall portion 120, the upper contact area 112 can come into contact with the outer peripheral side wall portion 120 during the elastic deformation.

Similarly, below the rib portion 130, the horizontal distance CL between the inner peripheral side wall portion 110 and the outer peripheral side wall portion 120 is a distance such that, when the lower contact area 113 of the inner peripheral side wall portion 110 is deformed toward the outer peripheral side wall portion 120, the lower contact area 113 can come into contact with the outer peripheral side wall portion 120 during the elastic deformation.

### <3. Holding the shift lever by the bearing in the present example>

According to the bearing 100 in the present example described above, the function of restricting the movement of the automobile shift lever in the lever axial direction (the direction in which the shift lever L is pulled out from the bearing 100 or the direction in which the shift lever L is pushed toward the bearing 100) and the function of smoothly operating a shift change when performing a shift change can be achieved with a single member.

Next, the holding of the shift lever L by the bearing 100 in the present example will be described with respect to a case where the shift lever L is swung, a case where the shift lever L is to be pulled out, and a case where the shift lever L is to be pushed in.

### <3.1. A case where the shift lever L is swung>

First, a case where the shift lever L is swung will be described with reference to Fig. 4.

The inner peripheral side wall portion 110 is divided at predetermined intervals along the circumferential direction. Thus, when the shift lever L is swung for a shift change, compared to the case where the entire circumference of the large spherical portion L2b of the shift lever L is held by the inner peripheral side wall portion 110, the contact resistance of the large spherical portion L2b of the shift lever L with respect to the inner peripheral side wall portion 110 is reduced because of arranging the upper contact area 112 and the lower contact area 113 of the inner peripheral side wall portion 110 at predetermined intervals along the circumferential direction.

Further, the shift lever separation area 114 of the inner peripheral side wall portion 110 is separated from the large spherical portion L2b of the shift lever L. Thus, the contact resistance of the large spherical portion L2b of the shift lever L with respect to the inner peripheral side wall portion 110 is reduced because the large spherical portion L2b separates from the shift lever separation area 114 by the gap C.

Further, the curvature center O1 of the upper curved surface 112a and the curvature center O2 of the lower curved surface 113a are separated from the curvature center OL of the large spherical portion L2b of the shift lever L in the vertical direction. Thus, the contact resistance of the large spherical portion L2b of the shift lever L with respect to the inner peripheral side wall portion 110 is reduced because the upper curved surface 112a and the lower curved surface 113a of the inner peripheral side wall portion 110 are in line contact (not in surface contact) with the large spherical portion L2b of the shift lever L.

Due to the above-described plurality of structures that reduce the contact resistance of the large spherical portion L2b of the shift lever L with respect to the inner peripheral side wall portion 110, by adopting the bearing 100 in the present example, smooth shift change operation with the shift lever L can be achieved when performing a shift change.

When the shift lever L is swung for a shift change, a load is applied to the inner peripheral side wall portion 110 from the shift lever L, but the load applied to the inner peripheral side wall portion 110 in this case is smaller than the cases described later where the shift lever L is to be pulled out from the bearing or where the shift lever L is to be pushed toward the bearing.

Therefore, in the case where the shift lever L is swung, the inner peripheral side wall portion 110 is elastically deformed toward the outer peripheral side wall portion 120, but the inner peripheral side wall portion 110 and the outer peripheral side wall portion 120 are separated from each other over the entire vertical direction.

### <3.2. A case where the shift lever L is to be pulled out>

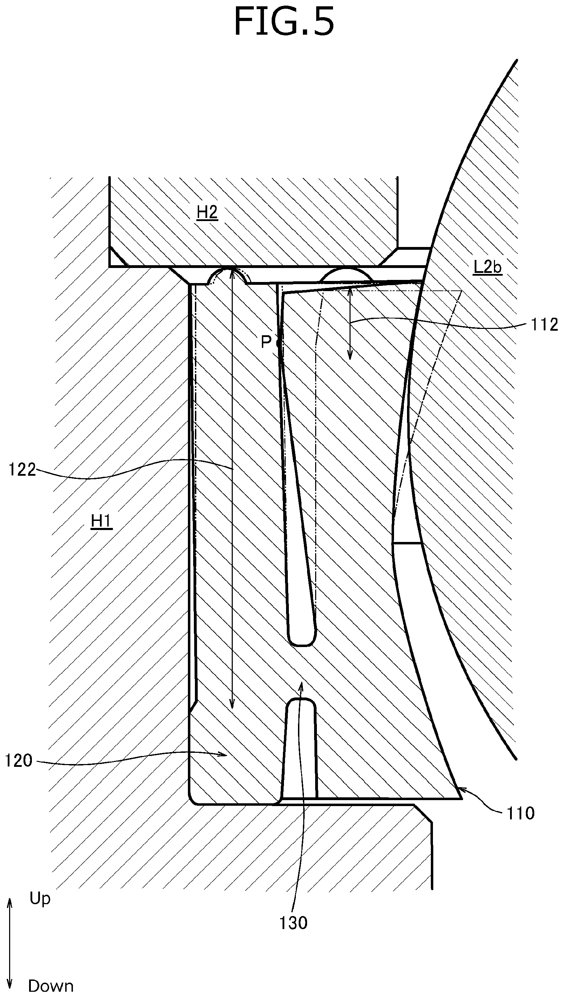

Next, a case where the shift lever L is to be pulled out will be described with reference to Fig. 5.

Fig. 5 is a cross-sectional view of a main part while the shift lever is being pulled out from the bearing.

When the shift lever L is pulled to be taken out, the shift lever L is moved upward with respect to the bearing 100.

At this time, as shown in Fig. 5, the upper contact area 112 side of the inner peripheral side wall portion 110 is elastically deformed and inclines toward the outer peripheral side wall portion 120 with the rib portion 130 serving as a base point, and the bending point P of the inner peripheral side wall portion 110 first comes into contact with the outer peripheral side wall portion 120.

Then, when the shift lever L is further moved upward with respect to the bearing 100, the inner peripheral side wall portion 110 further inclines toward the outer peripheral side wall portion 120 with the rib portion 130 serving as a base point, and the area above the bending point P of the inner peripheral side wall portion 110 comes into surface contact with the outer peripheral side wall portion 120. Then, the outer peripheral side wall portion 120 that is in contact with the inner peripheral side wall portion 110 is elastically deformed and inclines toward the lower housing H1 side.

As a result, as shown in Fig. 5, the housing separation area 122 of the outer peripheral side wall portion 120 that was separated from the lower housing H1 comes into contact with the lower housing H1.

Therefore, since the inner peripheral side wall portion 110 is formed to be elastically deformable so as to come into contact with the outer peripheral side wall portion 120, in a case where an excessive load is applied to the upper contact area 112 of the inner peripheral side wall portion 110 as a result of inadvertently pulling out operation of the shift lever L, this excessive load makes the upper contact area 112 of the inner peripheral side wall portion 110 elastically deformed toward the outer peripheral side wall portion 120 and brought into contact with the outer peripheral side wall portion 120. As a result, the excessive load applied from the shift lever L can be received by both the inner peripheral side wall portion 110 and the outer peripheral side wall portion 120 and by the lower housing H1.

### <3.3. A case where the shift lever L is to be pushed in>

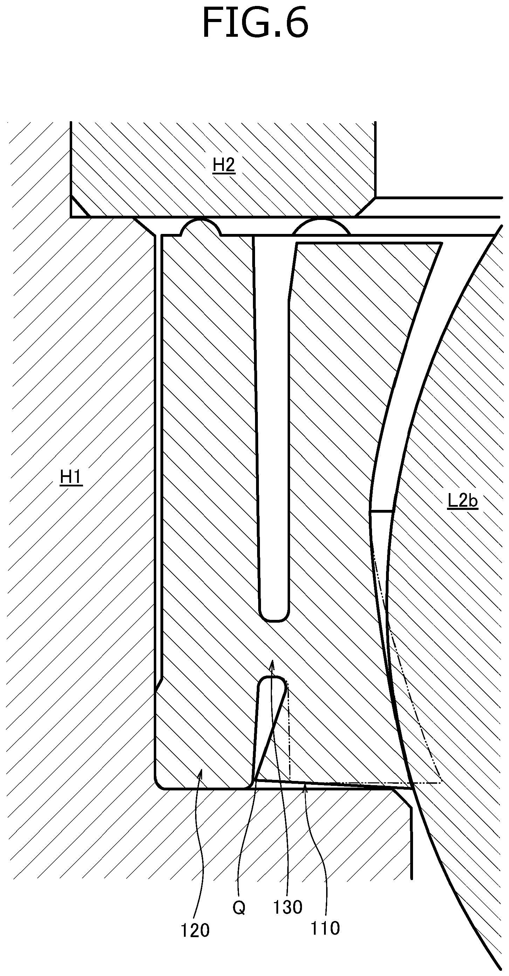

Next, a case where the shift lever L is to be pushed toward the bearing 100 will be described with reference to Fig. 6.

Fig. 6 is a cross-sectional view of a main part while the shift lever is being pushed toward the bearing.

When the shift lever L is pushed in, the shift lever L is moved downward with respect to the bearing 100.

At this time, as shown in Fig. 6, the lower contact area 113 side of the inner peripheral side wall portion 110 is elastically deformed and inclines toward the outer peripheral side wall portion 120 with the rib portion 130 serving as a base point, and an edge Q on the outer peripheral side of the inner peripheral side wall portion 110 first comes into contact with the outer peripheral side wall portion 120.

Therefore, since the inner peripheral side wall portion 110 is formed to be elastically deformable so as to come into contact with the outer peripheral side wall portion 120, in a case where an excessive load is applied to the lower contact area 113 of the inner peripheral side wall portion 110 as a result of inadvertently pushing in operation of the shift lever L, this excessive load makes the lower contact area 113 of the inner peripheral side wall portion 110 elastically deformed toward the outer peripheral side wall portion 120 and brought into contact with the outer peripheral side wall portion 120. As a result, the excessive load applied from the shift lever L can be received by both the inner peripheral side wall portion 110 and the outer peripheral side wall portion 120 and by the lower housing H1.

### <4. Effects of the present example>

As described above, the bearing 100 in the present example is composed of: the annular inner peripheral side wall portion 110 in contact with the shift lever L; the annular outer peripheral side wall portion 120 in contact with the housing H; and the annular rib portion 130, with which the inner peripheral side wall portion 110 and the outer peripheral side wall portion 120 are concentrically spaced apart from each other and which integrally connects the inner peripheral side wall portion 110 and the outer peripheral side wall portion 120. Thus, the assembling operation of the housing H on the vehicle side and the shift lever L can be easily carried out, and the burden of parts management can be reduced because the number of parts is minimized.

Further, the inner peripheral side wall portion 110 has the upper contact area 112 and the lower contact area 113, which come into contact with and interfere with the large spherical portion L2b of the shift lever L. Thus, since the inner peripheral side wall portion 110 interferes with the large spherical portion L2b of the shift lever L, it is possible to suppress rattling between the shift lever L and the bearing 100 when performing a shift change.

Further, since the inner peripheral side wall portion 110 has the shift lever separation area 114 separated from the large spherical portion L2b of the shift lever L, the smooth shift change operation of the shift lever L when performing a shift change can be achieved.

Further, since the inner peripheral side wall portion 110 is formed to be elastically deformable so as to come into contact with the outer peripheral side wall portion 120, the movement of the shift lever L in the lever axis direction can be suppressed so that it is possible to elastically hold the shift lever L and to prevent the shift lever L from being taken out from the bearing 100 and to support the shift lever L only with the elastic deformation of the inner peripheral side wall portion 110.

Further, since the outer peripheral side wall portion 120 has the housing contact area 121, which is elastically deformable and comes into contact with the housing H, it is possible to suppress rattling between the housing H and the bearing 100.

Further, since the outer peripheral side wall portion 120 has the housing separation area 122 separated from the housing H, the bearing 100 can elastically support a larger load.

Further, since the rib portion 130 connects the lower side of the inner peripheral side wall portion 110 and the lower side of the outer peripheral side wall portion 120, the predetermined swing position of the shift lever L can be maintained without the shift lever L being taken out from the bearing 100 vertically downward.

Further, since the protrusion 123 protruding in the vertical direction is formed on the top surface 122a of the outer peripheral side wall portion 120, the bearing 100 can be stably mounted on the housing H in a state where the vertical rattling between the housing H and the bearing 100 is absorbed.

### <5. Modified example>

The example of the present invention has been described above. However, the present invention is not limited to the above-described example; it is defined by the appended claims.

For example, in the above-described example, the bearing 100 holds the large spherical portion L2b of the shift lever L. However, the bearing 100 may hold the small spherical portion L2a.

For example, in the above-described example, the inner peripheral side wall portion 110 and the outer peripheral side wall portion 120 are C-shaped in a plan view. However, this is due to the shape of the shift lever. Thus, they may be O-shaped, which do not have a notch.

For example, in the above-described example, the inner peripheral side wall portion 110 is divided along the circumferential direction. However, the inner peripheral side wall portion 110 may not be divided along the circumferential direction.

For example, in the above-described example, the housing contact area 121 of the outer peripheral side wall portion 120 is divided along the circumferential direction. However, the housing contact area 121 may not be divided along the circumferential direction.

For example, in the above-described example, the protrusion 123 protrudes vertically upward from the top surface 122a of the housing separation area 122. However, but the protrusion 123 may protrude vertically downward from the bottom surface of the housing contact area 121 or may protrude from both of the bottom surface of the housing contact area 121 and the top surface 122a of the housing separation area 122.

Further, in the above-described example, the shape of the protrusion 123 is spherical. However, the shape of the protrusion 123 is not limited to the spherical shape.

For example, in the bearing 100 of the above-described example, the housing contact area 121 of the outer peripheral side wall portion 120 is formed on the lower side. However, the position of the housing contact area 121 of the bearing 100 is not limited to this position. For example, the housing contact area 121 may be in contact with the lower housing H1 at the same height as the rib portion 130 and or may be in contact with the lower housing H1 at a position higher than the rib portion 130.

### REFERENCE SIGNS LIST

- 100: bearing (bearing for shift lever)
- 110: inner peripheral side wall portion
- 111: opening
- 112: upper contact area
- 112a: upper curved surface
- 112b: top surface
- 113: lower contact area
- 113a: lower curved surface
- 113b: bottom surface
- 114: shift lever separation area
- 120: outer peripheral side wall portion
- 121: housing contact area
- 121a: bottom surface
- 122: housing separation area
- 122a: top surface
- 123: protrusion
- 124: opening
- 125: positioning protrusion
- 130: rib portion
- H: housing
- H1: lower housing
- H1a: bearing accommodating portion
- H1b: upper housing accommodating portion
- H2: upper housing
- H2a: insertion portion
- H2b: flange portion
- L: shift lever (automobile shift lever)
- L1: shift knob
- L2: shift lever body
- L2a: small spherical portion
- L2b: large spherical portion (spherical portion)
- L2c: connecting shaft
- OL: curvature center of large spherical portion
- O1: curvature center of upper curved surface
- O2: curvature center of lower curved surface
- A1: virtual circle
- A2: virtual circle
- X: central axis of virtual circle
- HR: height of rib portion
- WR: width of rib portion
- P: bending point
- Q: edge
- C: gap between inner peripheral side wall portion and shift lever
- CH: horizontal distance between inner peripheral side wall portion and outer peripheral side wall portion above rib portion
- CL: horizontal distance between inner peripheral side wall portion and outer peripheral side wall portion below rib portion

## Claims

1. A bearing (100) for a shift lever (L) and made of synthetic resin, the bearing (100) being arranged between an automobile shift lever (L), which has a spherical portion (L2b) serving as a center of swing in the shift lever body (L2), and a housing (H) on the vehicle side so that the bearing (100) swingably supports the automobile shift lever (L), wherein the bearing (100) is composed of:
an annular inner peripheral side wall portion (110) in contact with the automobile shift lever (L);
an annular outer peripheral side wall portion (120) in contact with the housing (H); and
an annular rib portion (130), with which the inner peripheral side wall portion (110) and the outer peripheral side wall portion (120) are concentrically spaced apart from each other and which integrally connects the inner peripheral side wall portion (110) and the outer peripheral side wall portion (120), and wherein
the inner peripheral side wall portion (110) has an upper contact area (112) and a lower contact area (113), which come into contact with and interfere with the spherical portion (L2b) of the automobile shift lever (L),
**characterized in that** the inner peripheral side wall portion (110) furthermore has a shift lever separation area (114) between the upper contact area (112) and the lower contact area (113) and separated from the spherical portion (L2b) of the automobile shift lever (L), wherein the inner peripheral side wall portion (110) is formed to be elastically deformable so as to come into contact with the outer peripheral side wall portion (120), and wherein the rib portion (130) connects the lower side of the inner peripheral side wall portion (110) and the lower side of the outer peripheral side wall portion (120).

2. The bearing (100) for a shift lever (L) according to claim 1, wherein the outer peripheral side wall portion (120) has a housing contact area (121), which is elastically deformable and comes into contact with the housing (H), and a housing separation area (122) separated from the housing (H).

3. The bearing (100) for a shift lever (L) according to claim 1 or 2, wherein the upper contact area (112) of the inner peripheral side wall portion (110) has an upper curved surface (112a) for coming into contact with the spherical portion (L2b) of the automobile shift lever (L), wherein
the lower contact area (113) of the inner peripheral side wall portion (110) has a lower curved surface (113a) for coming into contact with the spherical portion (L2b) of the automobile shift lever (L), and wherein
the curvature center (O1) of the upper curved surface (112a) and the curvature center (O2) of the lower curved surface (113a) are separated in the vertical direction.

4. The bearing (100) for a shift lever (L) according to any one of claims 1 to 3, wherein the inner peripheral side wall portion (110) is divided at predetermined intervals along the circumferential direction, and wherein
the rib portion (130) integrally connects the adjacent inner peripheral side wall portions (110).

5. The bearing (100) for a shift lever (L) according to any one of claims 1 to 4, wherein a protrusion (123) protruding in the vertical direction is formed on at least one of a top surface (122a) and a bottom surface (121a) of the outer peripheral side wall portion (120).

## Patentansprüche

1. Lager (100) für einen Schalthebel (L), das aus Kunstharz hergestellt ist, wobei das Lager (100) zwischen einem Kraftfahrzeugschalthebel (L), der einen kugelförmigen Abschnitt (L2b) aufweist, der als ein Schwenkzentrum in dem Schalthebelkörper (L2) dient, und einem Gehäuse (H) auf der Fahrzeugseite angeordnet ist, so dass das Lager (100) den Kraftfahrzeugschalthebel (L) schwenkbar lagert, wobei das Lager (100) zusammengesetzt ist aus:
einem ringförmigen Innenumfangsseitenwandabschnitt (110) in Kontakt mit dem Kraftfahrzeugschalthebel (L);
einem ringförmigen Außenumfangsseitenwandabschnitt (120) in Kontakt mit dem Gehäuse (H); und
einem ringförmigen Rippenabschnitt (130), mit dem der Innenumfangsseitenwandabschnitt (110) und der Außenumfangsseitenwandabschnitt (120) konzentrisch voneinander beabstandet sind und der den Innenumfangsseitenwandabschnitt (110) und den Außenumfangsseitenwandabschnitt (120) integral verbindet, und wobei
der Innenumfangsseitenwandabschnitt (110) einen oberen Kontaktbereich (112) und einen unteren Kontaktbereich (113) aufweist, die mit dem kugelförmigen Abschnitt (L2b) des Kraftfahrzeugschalthebels (L) in Kontakt kommen und mit diesem interferieren,
**dadurch gekennzeichnet, dass** der Innenumfangsseitenwandabschnitt (110) ferner einen Schalthebeltrennbereich (114) zwischen dem oberen Kontaktbereich (112) und dem unteren Kontaktbereich (113) aufweist und von dem kugelförmigen Abschnitt (L2b) des Kraftfahrzeugschalthebels (L) getrennt ist, wobei der Innenumfangsseitenwandabschnitt (110) so ausgebildet ist, dass er elastisch verformbar ist, um mit dem Außenumfangsseitenwandabschnitt (120) in Kontakt zu kommen, und wobei der Rippenabschnitt (130) die Unterseite des Innenumfangsseitenwandabschnitts (110) und die Unterseite des Außenumfangsseitenwandabschnitts (120) verbindet.

2. Lager (100) für einen Schalthebel (L) nach Anspruch 1, wobei der Außenumfangsseitenwandabschnitt (120) einen Gehäusekontaktbereich (121), der elastisch verformbar ist und mit dem Gehäuse (H) in Kontakt kommt, und einen Gehäusetrennbereich (122) aufweist, der von dem Gehäuse (H) getrennt ist.

3. Lager (100) für einen Schalthebel (L) nach Anspruch 1 oder 2, wobei der obere Kontaktbereich (112) des Innenumfangsseitenwandabschnitts (110) eine obere gekrümmte Fläche (112a) aufweist, um mit dem kugelförmigen Abschnitt (L2b) des Kraftfahrzeugschalthebels (L) in Kontakt zu kommen, wobei
der untere Kontaktbereich (113) des Innenumfangsseitenwandabschnitts (110) eine untere gekrümmte Fläche (113a) aufweist, um mit dem kugelförmigen Abschnitt (L2b) des Kraftfahrzeugschalthebels (L) in Kontakt zu kommen, und wobei
das Krümmungszentrum (O1) der oberen gekrümmten Fläche (112a) und das Krümmungszentrum (O2) der unteren gekrümmten Fläche (113a) in der vertikalen Richtung getrennt sind.

4. Lager (100) für einen Schalthebel (L) nach einem der Ansprüche 1 bis 3, wobei der Innenumfangsseitenwandabschnitt (110) in vorbestimmten Intervallen entlang der Umfangsrichtung geteilt ist, und wobei
der Rippenabschnitt (130) die benachbarten Innenumfangsseitenwandabschnitte (110) integral verbindet.

5. Lager (100) für einen Schalthebel (L) nach einem der Ansprüche 1 bis 4, wobei ein Vorsprung (123), der in der vertikalen Richtung vorsteht, auf einer oberen Fläche (122a) und/oder einer unteren Fläche (121a) des Außenumfangsseitenwandabschnitts (120) ausgebildet ist.

## Revendications

1. Palier (100) pour un levier de changement de vitesse (L) et réalisé en résine synthétique, le palier (100) étant agencé entre un levier de changement de vitesse d'automobile (L), qui a une partie sphérique (L2b) servant de centre d'oscillation dans le corps de levier de changement de vitesse (L2), et un boîtier (H) sur le côté véhicule de sorte que le palier (100) supporte de manière oscillante le levier de changement de vitesse d'automobile (L), dans lequel le palier (100) est composé de :
une partie de paroi latérale périphérique interne annulaire (110) en contact avec le levier de changement de vitesse d'automobile (L) ;
une partie de paroi latérale périphérique externe annulaire (120) en contact avec le boîtier (H) ; et
une partie de nervure annulaire (130), avec laquelle la partie de paroi latérale périphérique interne (110) et la partie de paroi latérale périphérique externe (120) sont espacées de manière concentrique l'une de l'autre et qui relie de manière solidaire la partie de paroi latérale périphérique interne (110) et la partie de paroi latérale périphérique externe (120), et dans lequel
la partie de paroi latérale périphérique interne (110) a une zone de contact supérieure (112) et une zone de contact inférieure (113), qui viennent en contact avec et interfèrent avec la partie sphérique (L2b) du levier de changement de vitesse d'automobile (L),
**caractérisé en ce que** la partie de paroi latérale périphérique interne (110) a en outre une zone de séparation de levier de changement de vitesse (114) entre la zone de contact supérieure (112) et la zone de contact inférieure (113) et séparée de la partie sphérique (L2b) du levier de changement de vitesse d'automobile (L), dans lequel la partie de paroi latérale périphérique interne (110) est formée pour être élastiquement déformable de manière à venir en contact avec la partie de paroi latérale périphérique externe (120), et dans lequel la partie de nervure (130) relie le côté inférieur de la partie de paroi latérale périphérique interne (110) et le côté inférieur de la partie de paroi latérale périphérique externe (120).

2. Palier (100) pour un levier de changement de vitesse (L) selon la revendication 1, dans lequel la partie de paroi latérale périphérique externe (120) a une zone de contact de boîtier (121), qui est élastiquement déformable et vient en contact avec le boîtier (H), et une zone de séparation de boîtier (122) séparée du boîtier (H).

3. Palier (100) pour un levier de changement de vitesse (L) selon la revendication 1 ou 2, dans lequel la zone de contact supérieure (112) de la partie de paroi latérale périphérique interne (110) a une surface incurvée supérieure (112a) pour venir en contact avec la partie sphérique (L2b) du levier de changement de vitesse d'automobile (L), dans lequel
la zone de contact inférieure (113) de la partie de paroi latérale périphérique interne (110) a une surface incurvée inférieure (113a) pour venir en contact avec la partie sphérique (L2b) du levier de changement de vitesse d'automobile (L), et dans lequel
le centre de courbure (O1) de la surface incurvée supérieure (112a) et le centre de courbure (O2) de la surface incurvée inférieure (113a) sont séparés dans la direction verticale.

4. Palier (100) pour un levier de changement de vitesse (L) selon l'une quelconque des revendications 1 à 3, dans lequel la partie de paroi latérale périphérique interne (110) est divisée à des intervalles prédéterminés le long de la direction circonférentielle, et dans lequel
la partie de nervure (130) relie de manière solidaire les parties de paroi latérale périphérique internes adjacentes (110).

5. Palier (100) pour un levier de changement de vitesse (L) selon l'une quelconque des revendications 1 à 4, dans lequel une saillie (123) faisant saillie dans la direction verticale est formée sur au moins l'une d'une surface supérieure (122a) et d'une surface inférieure (121a) de la partie de paroi latérale périphérique externe (120).
